# EUROPÄISCHE PATENTSCHRIFT

(11) **EP 2 034 508 B1**
(45) Veröffentlichungstag und Bekanntmachung des Hinweises auf die Patenterteilung: **29.02.2012**
(21) Anmeldenummer: 06757971.4
(22) Anmeldetag: 26.05.2006
(51) Int. Cl.: H01J 5/60, F16B 21/18

(54) **LAMPE MIT DREHBARER BIRNE UND LICHTQUELLE**
LAMP WITH A ROTATABLE LIGHT BULB AND A LIGHT SOURCE
LAMPE DOTÉE D'UNE AMPOULE ROTATIVE ET D'UNE SOURCE LUMINEUSE

(43) Veröffentlichungstag der Anmeldung: 11.03.2009
(73) Patentinhaber: Tsay, Victor Ivanovich, Moscow, 117463 (RU)
(72) Erfinder: Tsay, Victor Ivanovich, Moscow, 117463 (RU)
(74) Vertreter: Jeck, Anton
(86) Internationale Anmeldenummer: PCT/RU2006/000271
(87) Internationale Veröffentlichungsnummer: WO 2007/139419

(56) Entgegenhaltungen:
- WO-A1-95/29500
- RU-C1- 2 278 437
- SU-A1- 1 636 896
- SU-A1- 1 760 197
- US-A- 4 565 419

## Beschreibung

Die Erfindung bezieht sich auf eine Lampe mit Drehballon und Lichtquelle nach dem Oberbegriff des Anspruchs 1.

Die Lampe dient insbesondere zur Vervollkommnung der Konstruktion der Gasentladungs-Spiegellampen, welche für Allgemein- und Sonderbeleuchtungen angewendet werden.

Durch WO 95/29500 ist eine ausrichtbare Hochleistungslampe bekannt. Die Lampe hat einen mit einem Glasgefäß bzw. einer ballonförmigen Umhüllung aus Glas verbundenen Sockel. Der Sockel besteht aus zwei konzentrisch angeordneten und elektrisch miteinander verbundenen Teilen, einem Innenteil und einem als Schraubteil ausgeführten Außenteil. Innenteil und Schraubteil sind relativ zueinander verdrehbar, ohne axial zueinander verschiebbar zu sein. Der Glasballon ist mit dem Innenteil verbunden, so dass auch dieser gemeinsam mit dem Innenteil gegenüber dem Schraubteil verdrehbar ist. Eine Arretiervorrichtung ist vorgesehen, die eine Verdrehung von Innenteil und Schraubteil in einer Richtung erlaubt und in entgegengesetzter Richtung verhindert. Die Lampe hat außerdem in einem Isolierkörper angeordnete, voneinander isolierte elektrische Kontakte, welche mit einer Strahlungsquelle im Inneren des Drehballons verbunden sind. Die Strahlungsquelle ist Teil einer Lichtquelle der Lampe. Die Arretiervorrichtung ist durch einen Einweg-Ratschenmechanismus gebildet, welcher eine Drehung des Schraubteils in einer Richtung gegenüber dem Innenteil unbeschränkt erlaubt und eine Drehung von Innenteil und Schraubteil relativ zueinander in umgekehrter Richtung verhindert.

Zum Schutz von Schraubfassungen vor Beschädigungen gegen ein zu hohes Anzugsdrehmoment beim Einschrauben einer Lampe ist durch US 4,565,419 ein zwischen Lampe und Fassung anzuordnender Adapter bekannt. Der Adapter besteht aus einem in die Fassung einsetzbaren Schraubteil, sowie einem relativ zu diesem verdrehbaren Innenteil mit einer Aufnahme für die Lampe. Die axiale Verschiebbarkeit von Innenteil und Gehäuse ist durch Rückhaltemittel begrenzt. Das Gehäuse hat elektrische Kontakte, welche bei in eine Fassung eingesetztem Adapter mit den stromführenden Elementen der Fassung korrespondieren. Das Innenteil hat elektrische Kontakte, welche bei im Innenteil aufgenommener Lampe mit den stromführenden Elementen der Lampe korrespondieren. Die elektrischen Kontakte des Innenteils und des Gehäuses sind polungsrichtig miteinander verbunden. Zwischen Innenteil und Gehäuse sind Reibmittel angeordnet, über die ein begrenztes Drehmoment vom Innenteil auf das Gehäuse zum Einschrauben in eine Fassung übertragen werden kann.

Es ist eine Lampe mit Drehballon und Lichtquelle bekannt, deren Strahlungsquelle im Ballon eingebaut und der Sockel am Ballon befestigt ist (Urheberschein der UdSSR Nr. 1636896 A1, 23.03.91).

Der Mangel dieser technischen Lösung, welche als Stand der Technik betrachtet wird, besteht darin, dass es unmöglich ist, die Lage der Strahlungsquelle in Bezug auf die Ballonachse zu verändern. Das vermindert wesentlich die Betriebsmöglichkeiten der Lampe. Die Anwendung der Lampe in einem Beleuchtungskörper mit einem Reflektor, welcher mit einer Fassung für einen Schraubsockel versehen ist, ermöglicht es nicht, die Lichtverteilungskurve der Leuchte zu modifizieren.

Die Anwendung von Lampen mit Reflexionsfläche im Ballon erfordert den Einsatz von spezieller Fokussierfassungen statt der gängigen Schraubfassungen, sowie die Befestigung von einem speziellen Sockel auf der Lampe. Dies bedingt einen enormen Aufwand beim Betrieb und löst das Problem der Lampenstrahlung in einer bestimmten Richtung nicht vollständig.

Dem technischen Wesen nach ist der nächste Stand der Technik eine Lampe, die einen Drehballon und eine Lichtquelle enthält. Die Strahlungsquelle ist im Ballon eingebaut. Der auf dem Ballon befestigte Sockel besteht aus einem Innenteil und einem Schraubteil, einem Sicherungselement und einem Isolator. Der Innenteil und der Schraubteil sind mit einer Verriegelung gekoppelt. Ein Sicherungselement verhindert die gleichläufige Drehung der Sockelteile ineinander. Der Isolator ist mit einer Kontaktplatte versehen und am Innenteil des Sockels befestigt (Werbungsmaterialien der Fa. Reflux, Zeichnung Nr. GI-ZU.675721.038SB). Diese technische Lösung wurde als Stand der Technik genommen. Sie ermöglicht es, die Strahlungsrichtung zu ändern, indem in den Leuchtgeräten eine Lampe mit genormter Fassung unter dem Schraubsockel benutzt wird.

Der Mangel des Prototyps besteht in den zu hohen Herstellkosten der Lampe. Das liegt an der Montageschwierigkeit beim Zusammenbau des Sockels. Der weitere Mangel ist die hohe Wahrscheinlichkeit, dass der sichere elektrische Kontakt zwischen dem Innen- und dem Schraubteil des Sockels beim Einschrauben des Sockels in die Fassung unterbrochen wird. Wenn die Lampe in die Fassung eingeschraubt wird, stützt sich der Isolierkörper mit der Kontaktplatte auf dem Kontakt der Fassung ab. Wird die Lampe weiter gedreht, um sie in eine bestimmte Strahlungsrichtung zu bringen, werden an dem Innen- und dem Schraubteil des Sockels in den antipodalen (gegenseitig entgegengesetzten) Richtungen entlang der Achse bestimmte Kräfte angewandt. Diese Kräfte biegen die Kanten des Halterungselements auseinander. Das Halterungselement wird als ein Formring ausgeführt, zwischen dessen Enden sich die Kopfenden des Innen- und des Schraubteils des Sockels befinden. Dabei geht der Kontakt zwischen den Sockelteilen verloren.

Es ist Aufgabe der Erfindung, die Kosten für die Herstellung der Lampen und ihre Befestigung zu senken und die Lampenqualität zu erhöhen.

Die gestellte Aufgabe wird durch die Merkmale des Anspruchs 1 gelöst.

Die Lampe mit dem Drehballon und der Lichtquelle enthält eine Strahlungsquelle, einen Sockel, eine Arretiervorrichtung und einen Isolierkörper. Die Strahlungsquelle ist im Ballon eingebaut. Der Sockel ist auf dem Ballon befestigt. Der Sockel besteht aus einem Innen- und einem Schraubteil, die mittels einer Verriegelung miteinander verbunden sind. Die Arretiervorrichtung verhindert die gleichläufige Drehung der Sockelteile ineinander. Der Isolierkörper mit der Kontaktplatte ist am Innenteil des Sockels befestigt. Die Verriegelung ist aus einem Draht mit Federeigenschaften in Form von einem nicht geschlossenen mehrkantigen Ring ausgeführt. Die Verriegelung ist in einer Nut angeordnet, welche in der Seitenfläche des Isolierkörpers ausgeführt ist, und liegt an der umgebogenen Stirnfläche des Schraubteils des Sockels an.

Weitere zweckmäßige und vorteilhafte Ausgestaltungen der Lampe sind den Unteransprüchen zu entnehmen.

Die Erfindung wird anhand eines in den Zeichnungen dargestellten Ausführungsbeispiels näher erläutert. Es zeigen:
- Fig. 1: die Gesamtansicht der Lampe mit der Reflexionsfläche,
- Fig. 2: der Sockel der Lampe mit Teilschnitt,
- Fig. 3: den in den Sockel einbaubaren Isolierkörper in Teilansicht und Teil- schnitt und

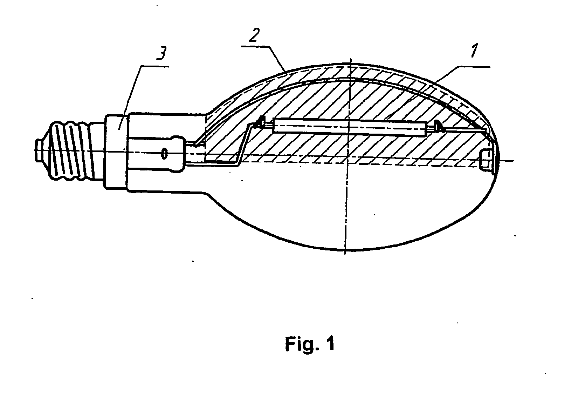

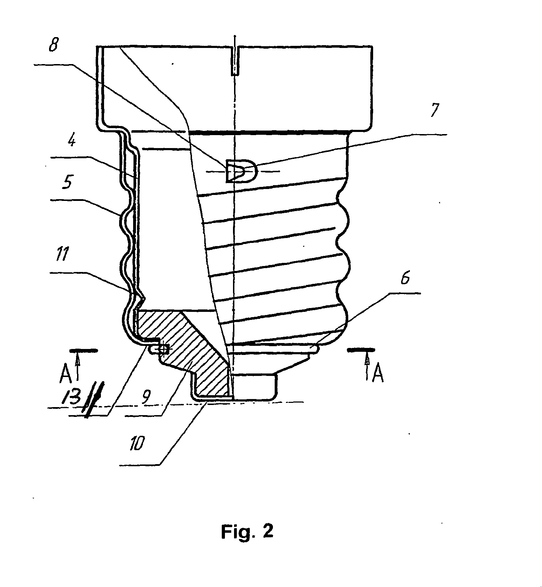

Die Reflexionsfläche ist in Fig. 1 auf dem Ballon 2 schraffiert gekennzeichnet. Der Brenner 1 ist im Ballon 2 eingebaut. Auch der Sockel nach Fig. 2 ist auf dem Ballon 2 angebracht. Der Sockel besteht aus einem Innenteil 4 und einem äußeren Schraubteil 5. Diese beiden Teile sind mittels einer Verriegelung 6 miteinander gekoppelt.

Die Arretierung besteht aus einem abgebogenen Lappen 7 und einem Schlitz 8, welche an den Sockelteilen auf gleichem Niveau ausgebildet sind. Der Lappen 7 ist am Innenteil 4 und der Schlitz 8 am Schraubteil 5 ausgebildet.

Wird die Lampe in die Fassung eingeschraubt, dann gleitet der Lappen 7 im Schlitz 8 in einer Richtung ohne die Drehung des Innenteils 4 des Sockels in Bezug auf das Schraubteil 5 zu verbinden. Wird die Lampe aus der Fassung herausgedreht, greift der Lappen 7 in den Schlitz 8 ein und verhindert damit die Drehung des Innenteils 4 des Sockels in Bezug auf das Schraubteil 5. Der Sockel wird aus der Fassung herausgedreht.

Ein Isolierkörper 9 ist mit einer Kontaktplatte 10 am Innenteil 4 des Sockels mittels Wölbungen 11 befestigt. Die Wölbungen 11 sind am Innenteil 4 ausgebildet.

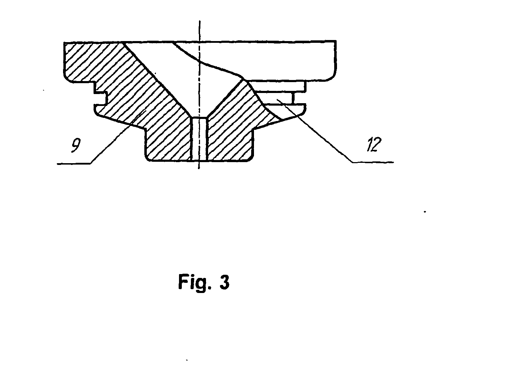

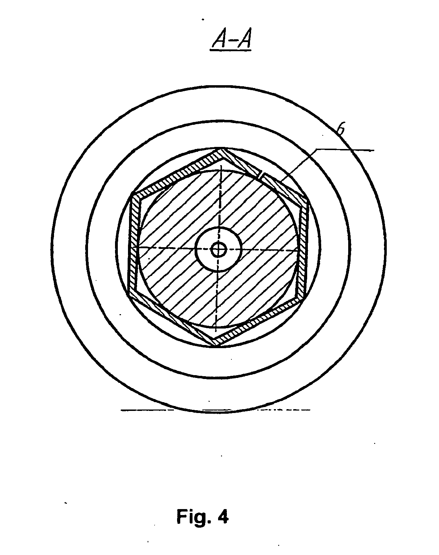

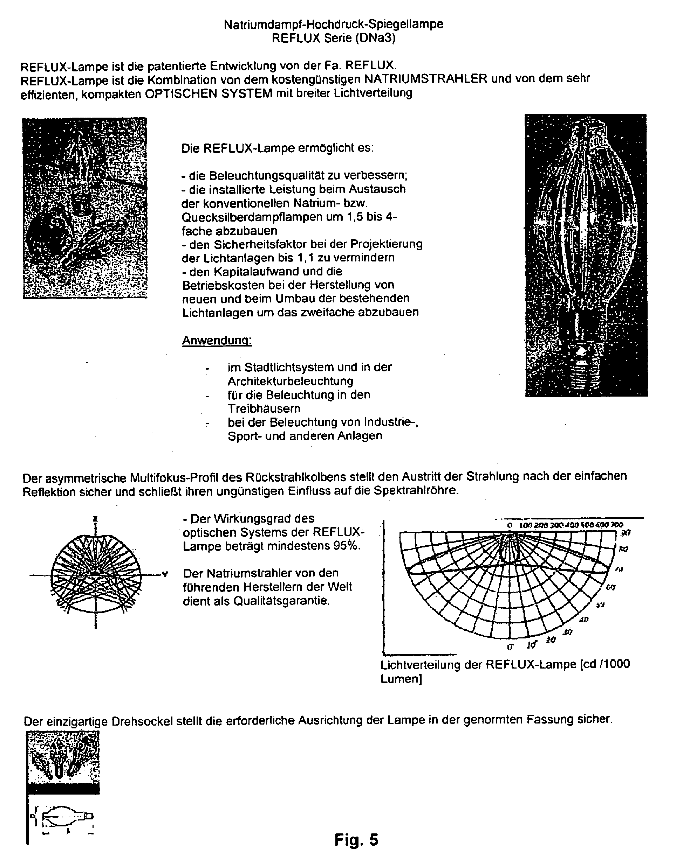

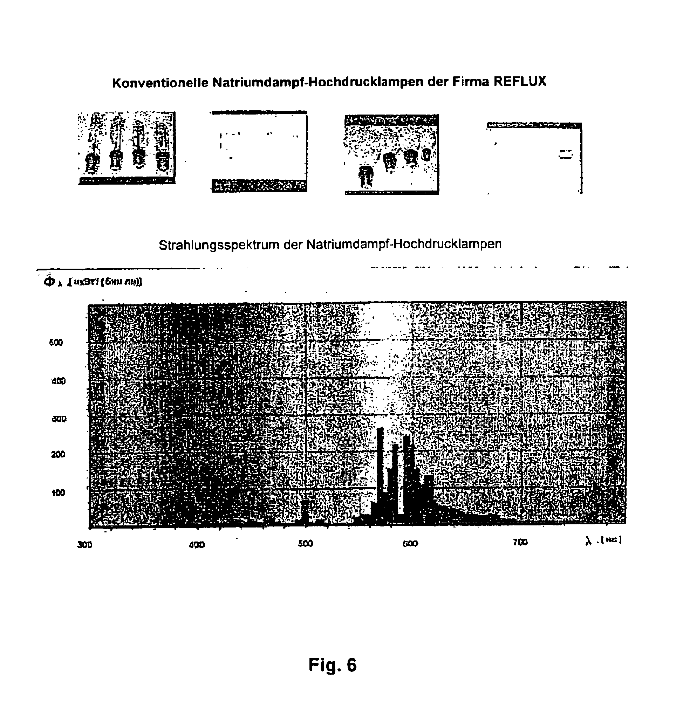

Die Verriegelung 6 ist in Fig. 4 im Schnitt A-A der Fig. 3 abgebildet. Die Verriegelung 6 besteht aus einem Draht mit Federeigenschaft. Er hat die Form eines nicht geschlossenen mehrkantigen Rings. Die Verriegelung 6 ist in einer Nut 12 der Seitenfläche des Isolierkörpers 9 eingebracht und liegt an der umgebogenen Stirnfläche 13 des Schraubteils 5 des Sockels an.

Fig. 3 zeigt den Isolierkörper 9 mit der lateralen Nut 12.

Die Tiefe der Nut 12 im Isolierkörper 9 muss minimal gehalten werden. Dies wird aus den Voraussetzungen einer sicheren Fixierung und des Haltens von beliebigen Axialbelastungen gewählt. Die Axialbelastungen entstehen dabei am Innenteil 4 und am Schraubteil 5 des Sockels während der Installation der Lampenfassung in der Leuchte und während der Entnahme der Lampe aus der Leuchte.

Der Zusammenbau sowie der Einbau des Sockels in die Lampe werden folgendermaßen vorgenommen:

Der Isolierkörper 9 wird in den zylinderförmigen Innenteil 4 des Sockels bis zum Anschlag gegen die Stirnfläche eingefügt. Der Isolierkörper 9 wird mittels der Wölbungen 11 am Innenteil 4 des Sockels im Sockel befestigt. Danach wird der äußere Schraubteil 5 auf den zylinderförmigen Innenteil 4 aufgesetzt. Die Verriegelung 6 wird arretiert. Die Verriegelung 6 wird in die Nut 12 des Isolierkörpers 9 eingeführt und hält den Sockel sicher im zusammengebauten Zustand. Nach dem Zusammenbau des Sockels erfolgt die Sockelung der Lampe sowie das Anschweißen der Zuleitungen an den Innenteil 4 des Sockels und an die am Isolierkörper 9 befestigte Kontaktplatte 10.

Wenn die Lampe in die Fassung eingeschraubt wird, und der Isolierkörper 9 mit seiner Kontaktplatte 10 sich gegen den Kontakt der Fassung stemmt, wird die Lampe weitergedreht, um eine bestimmte Strahlungsrichtung vorzugeben. Der Schraubteil 5 hält an, und der Innenteil 4 dreht sich mit dem Ballon 2 weiter, bis die erforderliche Position erreicht wird. Die Verriegelung 6 schlägt gegen die Stirnfläche des Schraubteils 5 des Sockels an und drückt ihn gegen den Innenteil 4 an, ohne den sicheren Kontakt zwischen den Sockelteilen zu verlieren. Ggf. kann die Lampe mehrmals um die eigene Achse gedreht werden, um die erforderliche Position zu erreichen. Der Lappen 7 ist an der Innenfläche angeordnet. Der Lappen 7 gleitet den Schlitz 8 entlang, ohne die Drehung des Innenteils 4 des Sockels in Bezug auf den Schraubteil 5 zu verhindern.

Beim Herausdrehen der Lampe aus der Fassung greift der Lappen 7 in den Schlitz 8 ein und verhindert die Drehung des Innenteils 4 des Sockels in Bezug auf den Schraubteil 5. Der Sockel wird aus der Fassung herausgedreht.

Es wurde ein Los der Lampen in Übereinstimmung mit der Beschreibung aus der Anmeldung hergestellt. Die Lampen hatten Natriumbrenner mit einer Leistung von 250 W. Die Lampen wurden in einen Ellipsoid-Ballon 2 mit einem Durchmesser von

120 mm eingebaut. Der Innenteil des Ballons 2 wurde als Spiegeloberfläche ausgeführt. Die Verriegelung 6 wurde aus einem Draht mit einem Durchmesser von 1,5 mm gefertigt. Der Draht wies Federeigenschaften auf.

Die durchgeführten Versuche zeigten, dass keine Kontaktunterbrechung zwischen dem Innenteil 4 und dem Schraubteil 5 des Sockels der Lampe vorlag. Der Arbeitsaufwand beim Zusammenbau des Sockels und während der Lampenfertigung nahm wesentlich ab.

Die Anwendung der Erfindung bei der Herstellung von Natrium-Spiegellampen reduziert die Selbstkosten der Lampen wesentlich, wobei alle ihre Gebrauchseigenschaften erhalten bleiben. Das ermöglicht es, bei einem Lampenpreis von 210 Rubel/Stck. und bei der Jahresproduktion von 200.000 Stck. den wirtschaftlichen Effekt in Höhe von 800.000 Rubel zu erreichen.

## Patentansprüche

1. Lampe mit einem Drehballon und einer Lichtquelle, die eine Strahlungsquelle, einen Sockel, eine Arretiervorrichtung und einen Isolierkörper (9) aufweist, wobei die Strahlungsquelle im Ballon (2) eingebaut ist und der Sockel auf dem Ballon befestigt ist,
wobei der Sockel aus einem Innenteil (4) und einem Schraubteil (5) besteht, die mittels einer Verriegelung (6) miteinander verbunden sind,
wobei die Arretiervorrichtung (Lappen 7, Schlitz 8) die gleichläufige Drehung von Innenteil (4) und Schraubteil (5) des Sockels ineinander in einer Richtung verhindert, und
wobei der Isolierkörper (9) mit einer Kontaktplatte (10) am Innenteil (4) des Sockels befestigt ist,
**dadurch gekennzeichnet,**
**dass** die Verriegelung (6) aus einem Draht mit Federeigenschaften in Form eines nicht geschlossenen mehrkantigen Rings ausgebildet ist und
**dass** die Verriegelung (6) in einer Nut (12) des Isolierkörpers (9) angeordnet ist und an der umgebogenen Stirnfläche des Schraubteils (5) des Sockels anliegt.

2. Lampe nach Anspruch 1,
**dadurch gekennzeichnet,**
**dass** die Arretiervorrichtung aus einem abgebogenen Lappen (7) und einem Schlitz (8) besteht, welche am Innenteil (4) bzw.am Schraubteil (5) des Sockeln auf gleichem Niveau ausgebildet sind.

3. Lampe nach Anspruch 2,
**dadurch gekennzeichnet,**
**dass** der Lappen (7) am Innenteil (4) und der Schlitz (8) am Schraubteil (5) ausgebildet sind.

4. Lampe nach Anspruch 1, 2 oder 3,
**dadurch gekennzeichnet,**
**dass** der Isolierkörper (9) mittels Wölbungen (11) am Innenteil (4) des Sockels im Sockel befestigt ist.

5. Lampe nach Anspruch 4,
**dadurch gekennzeichnet,**
**dass** die Wölbungen (11) am Innenteil (4) ausgebildet sind.

## Claims

1. A lamp having a rotatable bulb and a light source, which has a radiation source, a base, a catch device, and an insulating body (9), in which the radiation source is built into the bulb (2), and the base is secured to the bulb (2),
in which the base comprises an inner part (4) and a threaded part (5), which are joined to one another by means of a lock (6),
in which the catch device (tab 7, slot 8) prevents the simultaneous rotation of the inner part (4) and threaded part (5) of the base into one another in one direction, and
the insulating body (9) is secured by a contact plate (10) to the inner part (4) of the base,
**characterized in that**
the lock (6) is embodied from a wire with spring properties in the form of a non-closed polygonal ring, and
that the lock (6) is disposed in a groove (12) of the insulating body (9) and rests on the bent-over end face of the threaded part (5) of the base.

2. The lamp as defined by claim 1,
**characterized in that**
the catch device comprises a bent-out tab (7) and a slot (8), which are embodied at the same level on the inner part (4) and/or on the threaded part (5) of the base.

3. The lamp as defined by claim 2,
**characterized in that**
the tab (7) is embodied on the inner part (4) and the slot (8) is embodied on the threaded part (5).

4. The lamp as defined by claim 1, 2, or 3,
**characterized in that**
in the base, the insulting body (9) is secured to the inner part (4) of the base by means of curved features (11).

5. The lamp as defined by claim 4,
**characterized in that**
the curved features (11) are embodied on the inner part (4).

## Revendications

1. Lampe dotée d'une ampoule rotative et d'une source lumineuse qui présente une source de rayonnement, un socle, un dispositif d'arrêt et un corps isolant (9), la source de rayonnement étant intégrée dans l'ampoule (2) et le socle fixé sur l'ampoule,
le socle étant composé d'une partie intérieure (4) et d'une partie filetée (5) qui sont reliées ensemble au moyen d'un verrouillage (6),
le dispositif d'arrêt (patte 7, fente 8) empêchant la rotation dans le même sens de la partie intérieure (4) et de la partie filetée (5) du socle l'une dans l'autre dans un sens, et
le corps isolant (9) étant fixé par une plaque de contact (10) à la partie intérieurs (4) du socle,
**caractérisée en ce**
**que** le verrouillage (6) est formé d'un fil ayant des propriétés élastiques sous la Forme d'un anneau polygonal non fermé et
**que** le verrouillage (6) est disposé dans une gorge (12) du corps isolant (9) et en appui contre la surface frontale repliée de la partie filetée (5) du socle.

2. Lampe selon la revendication 1,
**caractérisée en ce**
**que** le dispositif d'arrêt se compose d'une patte (7) repliée et d'une fente (8) qui sont formées au même niveau sur la partie intérieure (4), respectivement sur la partie filetée (5) du socle.

3. Lampe selon la revendication 2,
**caractérisée en ce**
**que** la patte (7) est formée sur la partie intérieure (4) et la fente (8) sur la partie filetée (5).

4. Lampe selon la revendication 1, 2 ou 3,
**caractérisée en ce**
**que** le corps isolant (9) est fixé dans le socle au moyen de concavités (11) sur la partie intérieure (4) du socle.

5. Lampe selon la revendication 4,
**caractérisée en ce**
**que** les concavités (11) sont formées sur la partie intérieure (4).
